# EUROPEAN PATENT APPLICATION

(11) **EP 0 730 250 A1**
(43) Date of publication of application: **04.09.1996**
(21) Application number: 95930731.5
(22) Date of filing: 12.09.1995
(51) Int. Cl.: G06K 19/00

(54) **RECORDING CARD AND RECORDING METHOD FOR TWO-DIMENSIONAL CODE**

(30) Priority: 17.09.1994 JP 19940248760
(71) Applicant: YOSHIDA, Hirokazu, Osaka-shi, Osaka 534 (JP); Kokumai, Hitoshi, Hyogo 651-12 (JP)
(72) Inventor: YOSHIDA, Hirokazu, Osaka-shi, Osaka 534 (JP); Kokumai, Hitoshi, Hyogo 651-12 (JP)
(74) Representative: Wilkinson, Stephen John
(86) International application number: PCT/JP1995/001801
(87) International publication number: WO 1996/008788

(57) **Abstract**

A two-dimensional code printing mask layer is formed at a part of the upper surface of an invisible ink layer and two-dimensional code information is recorded by putting the invisible ink layer in mask state by printing of two-dimensional code. Two-dimensional code information is made decipherable by floating printing (by computer-controlled printer) of the printing mask layer on the upper surface of the invisible ink layer by irradiation of invisible rays or the like. Individual data recording by two-dimensional code is made possible by the printing mask layer and large information quantity can be recorded. Decipherment and change of recorded data by a third person can be checked. Cost of data recording can be reduced by adopting printing by a printer of universal use.

## Description

### BACKGROUND OF THE INVENTION

### Field of the invention

This invention relates to an information recording card in which credit records, sales records or the like of a credit card, a bank card, a note card (a deposit amount recording card), etc. are recorded. More particularly, this invention relates to an information recording card which uses a two-dimensional code as an information recording medium.

Description of the prior art:

As an information recording card of this kind, there has been known a membership card in which a membership number and a code-number of a credit card, a bank card or the like are recorded.

In the membership card of this kind, a beltlike recording area is formed at a part of the card and information is recorded in said information area, at the time of issuing a card, by printing indication or by magnetic indication using one-dimensional code (bar code, for example) as information recording means. Also, the whole surface of a card or the upper surface of the recording area of printing indication or magnetic indication is mask-coated with a very thin film so that printing indication of the recording area is made invisible.

As an information recording card of individual information additive type (individual additional information, such as quantity, amount of money, date of use, name of railway station to enter, etc. are filled in when the card is used), there have been known a goods exchange note card (a pinball gift receipt card, a telephone card, a pinball balls receipt card, for example), a coupon ticket of magnetic recording type, etc.

In the information recording card of the above kind, a beltlike recording area is formed at a part of the card and information is recorded, at the time of issuing the card, in said recording area and individual additional information is recorded additionally, when the card is used, by using one-dimensional code (bar code, bit-row marking, for example) as information recording medium.

The invisible ink is generally adopted for letterpress or offset printing for the reason of its physical properties. In this case, a printer and an ink ribbon for the printer are required to be of special type and this raises problematical points in respect of coat and technique. Also, recording of data with invisible ink by utilizing letterpress or offset printing will mean recording of only the same data in large quantities. This is undesirable from the aspect of use and data security.

In the case of the membership card according to the known technique mentioned above, membership cards can be completed at comparatively low cost by adopting letterpress printing for mass production. However, since it is impossible to add individual information and to replace data, it is impossible to detect illicit use of the card by a person other than the real owner by reading the contents of recording in the card. Therefore, to cope with production of forged cards and illicit use of the card, it is required to confirm the code number and the condition of use of the card by communication collation with a center computer.

In the case of the information recording card of individual information additive type, individual additional information is recorded additionally when the card is used. The card of this type has such disadvantage that (1) its utility as information recording card is problematical because information recorded additionally can be deciphered and changed for illicit use and (2) the quantity of information to be recorded is small because it uses one-dimensional code (bar code, magnetic stripe, for example) as information recording means and therefore it is suitable for recording of only Arabic numerals and symbols but is unsuitable for recording of Chinese characters, figured code symbols, etc. in a limited small space.

### SUMMARY OF THE INVENTION

The present invention has for its object to heighten the utility value of information recording cards by increasing information quantity per unit area by the use of two-dimensional code (stud bar code, hereinafter referred to as stereo-bar code), 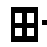 -shaped code, matrix-shaped code in which 2N pcs. bit data are arranged in two-dimensional direction (X-axis direction and Y-axis direction) in the information recording card of individual information additive type and also to check interpretation and change of information recorded additionally.

Also, the present invention has for its object to make interpretation and change of information recorded additionally very difficult by making the recorded portion of any recorded information and marking itself of two-dimensional code inexplicit as far as possible by a simple method of low cost (without using the special invisible ink printing which has problematical points in respect of cost and technique).

The first invention of the present application includes an invisible ink layer formed with invisible ink of the same color as printing (by computer-controlled printer) at a part or the whole part of the card paper and a printing mask layer which is an information area (set on a part or the whole part of the upper surface of the invisible ink layer) in which a two-dimensional code information is printed by a computer-controlled printer. The two-dimensional code information is recorded by making the information area of the invisible ink layer into mask state. Thus, the two-dimensional code information of the printing mask layer is made undecipherable under visible rays but is made decipherable under invisible rays (printing by computer-controlled printer of the printing mask layer is made to come to the surface of the invisible ink layer).

The second invention of the present application further includes a visible ink layer which becomes the surface of the card and is formed at a part or the whole part of card paper. This visible ink layer, the invisible ink layer and the printing by computer-controlled printer are matched in color tone one another so that the position and the range of the information recording area are made difficult to observe and thus deciphering of the recorded data is made difficult.

According to the third invention of the present application, a material card having an invisible ink layer formed by applying invisible ink of the same color as printing (by computer-controlled printer) to a part or the whole part of a card paper is formed, an information area is set at a part or the whole part of the upper surface of the invisible ink layer of the material card, and a printing mask layer is formed in said information area. Under this arrangement, the two-dimensional code information is recorded or is read by the invisible ink layer being made into mask state by irradiation of special light source for invisible ink.

### BRIEF DESCRIPTION OF THE DRAWING

Fig. 1 shows a two-dimensional code recording card of the embodiment of the first invention of the present application, in which (a) is a plan view and (b) is a vertical section.
Fig. 2 shows a two-dimensional code information recording card (two-dimensional code information recording card having printing paper or invisible ink layer), in which (a) is a plan view and (b) is a vertical section.
Fig. 3 shows a two-dimensional code information recording card (two-dimensional code information recording card having a around color printing layer or visible ink layer), in which (a) is a plan view and (b) is a vertical section.
Fig. 4 is an explanation drawing of the method of recording information in the two-dimensional code information recording card of the third invention of the present application, in which (a) is a material card and (b) is a card for which information recording is completed.
Fig. 5 is an explanation drawing of the position and the range of the information area.
Fig. 6 is an explanation drawing of the position and the range of the printing mask layer in relation to the information area, and
Fig. 7 is an explanation drawing of data recording by two-dimensional code on the printing mask layer.

### DETAILED DESCRIPTION OF THE INVENTION

In order to explain the present invention in more detail, it is explained below with reference to the attached drawings.

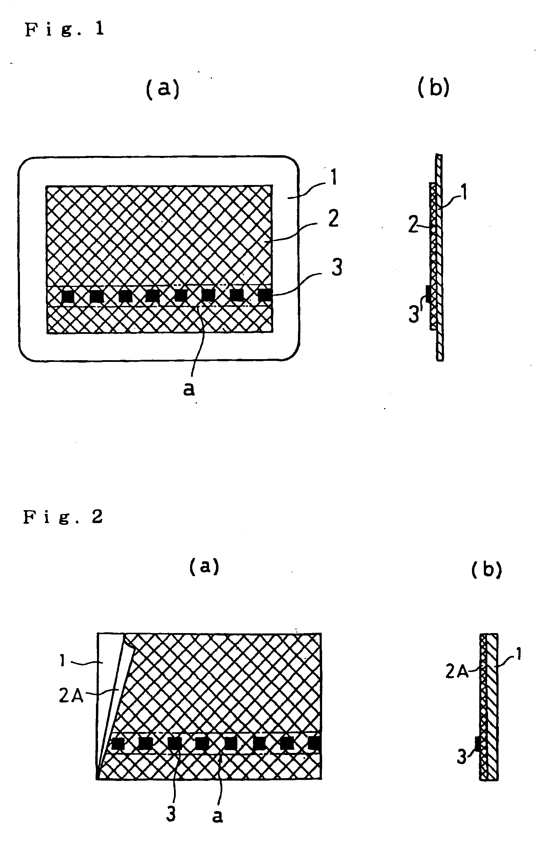

Referring to Fig. 1, an invisible ink layer 2 is formed by applying invisible ink of the same color as printing (by computer-controlled printer) to the greater part of the surface (information data recording surface) of a card paper 1. An information area a is set at a part of the upper surface of the invisible ink layer 2 and a printing mask layer 3 is formed by printing (by computer-controlled printer) a two-dimensional code information on said information area a.

In embodying the first invention, the information area a in the invisible ink layer 2 and the position and the range of the existence of the printing mask layer 3 are made obscure by matching the invisible ink layer 2 and the printing mask layer 3 in color tone (through luster and gloss matching).

Further, it is desirable to make the position and the range of the invisible ink layer undecipherable. In this respect, referring to Fig. 2, an invisible ink layer 2 is formed by sticking a printing paper 2A (to which invisible ink of the same color as printing by computer-controlled printer is applied) to the whole surface of the card paper 1 (information data recording surface) and thus the whole surface of the card paper 1 is made the invisible ink layer 2.

In the above way, the information area a of the invisible ink layer 2 is made in the state of invisible mask at the printing mask layer 3 of the two-dimensional code formed partially on the upper surface of the invisible ink layer and thus the two-dimensional code information is recorded. Therefore, the two dimensional code information of the printing mask layer 3 is made undecipherable under visible rays but is made decipherable due to printing (by computer-controlled printer) of the printing mask layer 3 coming to the surface of the invisible ink layer 2 by irradiation of invisible rays.

The second invention of the present application has for its object to make the position and the range of the invisible ink layer 2 in the first invention indecipherable. In place of the printing paper 2A to which invisible ink is applied (in Fig. 2), an invisible ink layer 2 is formed at a part of a ground color printing layer (visible ink layer) 1 A matched in color tone to the invisible ink layer 2. The ground color printing makes it possible to effect the present invention for the continuous roll paper and plastic sheet as card paper.

From the above, the second invention of the present application makes the position and the range of the invisible ink layer indecipherable under visible rays due to color tone matching of the surface ground color of the card paper to the invisible ink layer.

An explanation is made below about the manufacturing process of the two-dimensional code information recording card (method of recording information) under the present invention.

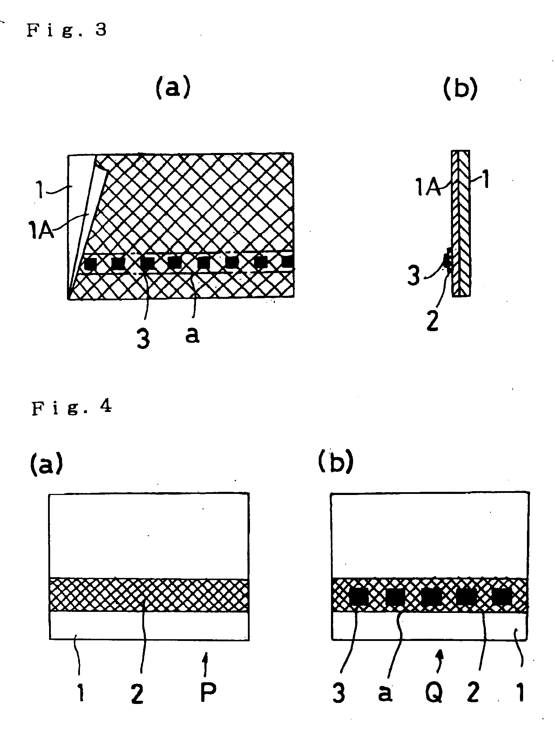

Referring to Fig. 4, material cards P (refer to (a)) are mass-produced. The material card P is produced by forming an invisible ink layer 2 by applying invisible ink (of the same color as printing by computer-controlled printer) by printing means (offset printing, letterpress, etc.) on a part (the whole part in the case of the card paper shown in Fig. 2 (a), (b)) of the surface (information data recording surface of the card paper) of the card paper (paper or plastic sheet). In this case, it is of course possible to indicate pictures, merchandise photos, membership numbers, etc. by printing means at the position other than the information data recording surface or the surface of the opposite side of the card paper (in the case of telephone cards, magnetic card coupon tickets of electric railway company, etc.).

As to the material of material card P, roll paper may be used. In this case, roll paper to which the above-mentioned printing was effected is cut into pieces in the desired size.

As to the invisible ink, ultraviolet rays luminous ink can be used. In this case, existence of the invisible ink layer 2 is made invisible under visible rays but existence and position of the invisible ink layer 2 is clearly recognized under ultraviolet rays.

In manufacturing two-dimensional information recording cards of the second invention of the present application, invisible ink which is matched in color tone (through luster, gloss mataching) to printing (by computer-controlled printer) is used for formation of the invisible ink layer 2. In manufacturing the two-dimensional information recording card shown in Fig. 3, the ground color printing layer (visible ink layer) 1A is formed by printing means prior to the formation of the invisible ink layer 2.

Referring to Fig. 4(b), an information area a is selected on the material card P (Fig. (a)) and a two-dimensional code information is printed on said information area a by a computer-controlled printer (general micro-computers, such as a dot printer, an ink jet printer, a laser printer, etc.) so as to form a printing mask layer 3.

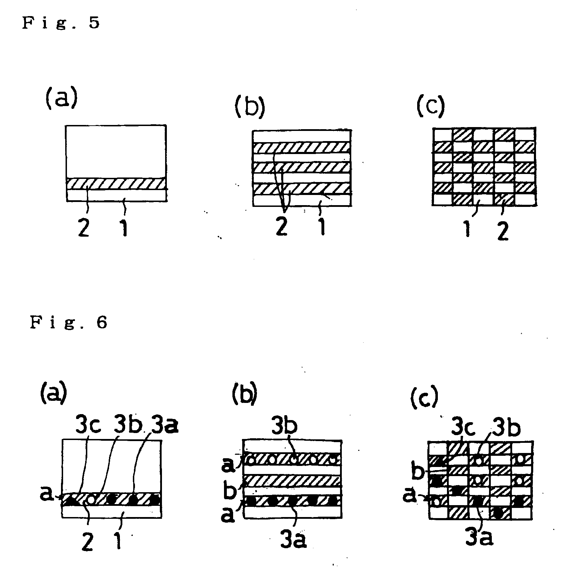

Fig. 5 shows embodiments of forming an information area a at a part of the upper surface of the card paper, in which (a) shows a single beltlike area, (b) shows a plurality of beltlike area and (c) shows an area of combined figures.

Fig. 6 shows a two-dimensional code information recording card of the embodiment in which a printing mask layer 3 is formed at a part of an information area a. A part of the information area a is made a dummy information area b and the printing mask layer 3 is made into three kinds, namely, a real printing mask layer 3a, a dummy printing mask layer 3b and a code printing mask layer 3c. Under this arrangement, decipherment and forgery of the printing mask layer 3 of the information area by a third person are made difficult. In the two-dimensional code information recording card having the code printing mask layer 3c, secrecy of data can be heightened by changing the recording in the code printing mask layer 3 for each card and by selecting the real printing mask layer 3 on the basis of the indication by the recording in the code printing mask layer 3c. The code printing mask layer 3c can be recorded at the time of manufacturing the material cards.

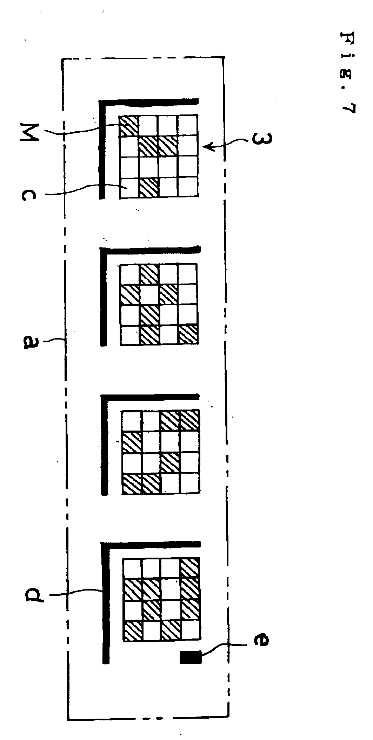

Fig. 7 shows data recording by the two-dimensional code to be recorded by the printing mask layer 3. As the information recording medium, the two-dimensional code (stereo-bar code, 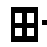 -figured code, matrix-shaped code formed with unit mark areas c having 2N pcs. bit data arranged in two-dimensional direction or X-axis direction and Y-axis direction) is used. In Fig. 7, d is a base line which shows the range of a unit two-dimensional code (in Fig. 7, it is composed of 16 unit mark areas c and can correspond to JIS Chinese character code) and decides the range of each unit printing mask layer 3 at the time of reading data.

In reading recorded data of the two-dimensional code information recording card, by providing a device of emitting special rays for invisible ink the invisible ink layer 2 which is partially masked by the printing mask layer 3 is detected, namely, the printing mask layer 3 is detected in the state of negative-positive reversal. By computer-image treating this detected output, recorded data, private information, sales information, code symbols, etc. of two-dimensional code of the printing mask layer 3 of the two-dimensional code information recording card are deciphered.

In the embodiment mentioned above, data record of two-dimensional code is formed only in the printing mask layer 3 but it is possible to add data record of two-dimensional code by visible ink (namely, visible data record of two-dimensional code) to the ground color printing layer 1A at the portion where the invisible ink layer 2 does not exist, for example, two-dimensional code data for lot control can be recorded at the time of manufacturing material cards.

By adopting a collation system for the data record for lot controlling by two-dimensional code at the time of manufacturing, the visible data record of two-dimensional code added simultaneously with data recording to the printing mask layer 3, the record of ID (card) code numbers which change day by day, etc., security of data record can be heightened.

In the first invention of the present application, owing to the printing mask layer, individual data recording by two-dimensional code is made possible and therefore more information quantity than in the case of one-dimensional code can be recorded. Also, two-dimensional code information printing position of the printing mask layer is made indecipherable under visible rays but two-dimensional code information is made decipherable by floating the printing (by computer-controlled printer) of the printing mask layer on the upper surface of the invisible ink layer by irradiation of invisible rays.

In the second invention of the present application, a visible ink layer (which becomes the surface of card) is formed at a part or the whole part of card paper and said visible ink layer is matched, in color tone, to the invisible ink layer and the printing (by computer-controlled printer) so that the location of information recording area in the card is made difficult to detect and accordingly the position and the range of the invisible ink layer at the upper surface of card paper are made indecipherable, namely, decipherment and change of record data by a third person can be checked.

In the third invention of the present application, a material card having an invisible ink layer to which invisible ink of the same color as printing (by computer-controlled printer) is applied beforehand is formed and a printing mask layer is formed by printing of two-dimensional code information by a computer-controlled printer. Use of general ink for printing and adoption of two-dimensional code have the effect of reducing the cost of data recording.

### Industrial utility:

The two-dimensional code information recording card under the present invention has utility value, especially when it is applied to credit cards, bank cards, note cards (deposit amount recording cards) or the like, in which credit records, sales information, etc. are recorded.

## Claims

1. A two-dimensional code information recording card
**characterized in that** it includes
an invisible ink layer of the same color as printing (by computer-controlled printer) formed at a part or
the whole part of card paper,
a printing mask layer formed by printing (by computer-controlled printer) two-dimensional code information in an information area set at a part or the whole part of the upper surface of the invisible ink layer, wherein two-dimensional code information is recorded when the information area puts the invisible ink layer in mask state by printing of two-dimensional code and the two-dimensional code information of the printing mask layer is made indecipherable under visible rays but is made decipherable by floating the printing (by computer-controlled printer) of the printing mask layer on the upper surface of the invisible ink layer by irradiation of invisible rays or the like.

2. A two-dimensional code information code recording card as defined in Claim 1, **characterized in that** the invisible ink layer is formed with invisible ink which is matched to the printing (by computer-controlled printer) in color tone through luster and gloss matching.

3. A two-dimensional code information recording card
**characterized in that** it includes a visible ink layer which becomes the surface of a card formed at a part or the whole part of card paper, an invisible ink layer formed with invisible ink at a part or the whole part of said visible ink layer which becomes the surface of a card, and
a printing mask layer composed by printing (by computer-controlled printer) two-dimensional code information in an information area set at a part or the whole part of the upper surface of said invisible ink layer,
wherein said visible ink layer, said invisible ink layer and said printing (by computer-controlled printer) are matched in color tone one another and two-dimensional code information is recorded by the information area putting the invisible ink layer in mask state by printing of two-dimensional code, whereby two-dimensional code information of the printing mask layer is made indecipherable under visible rays but is made decipherable by floating printing (by computer-controlled printer) of the printing mask layer on the upper surface of the invisible ink layer by irradiation of invisible rays or the like and the location of the information recording area in the card is made difficult to detect.

4. A method of recording information in a two-dimensional code information recording card **characterized in that** a material card having an invisible ink layer which is formed at a part or the whole part of card paper by applying invisible ink of the same color as printing (by computer-controlled printer) thereto is formed, an information area is set at a part or the whole part of the upper surface of the invisible ink layer of material card,
a printing mask layer is formed by printing two-dimensional code information in said information area by a computer-controlled printer,
whereby two-dimensional code information is recorded or is read by the invisible ink layer being put in mask state by irradiation of special light source for invisible ink.

5. A method of recording information in a two-dimensional code information recording card as defined in Claim 4, **characterized in that** a visible ink layer which becomes the surface of card is formed at a part or the whole part of card paper, an invisible ink layer of material card is formed with invisible ink which is matched in color tone to printing (by computer-controlled printer) through luster and gloss matching on the visible ink layer and two-dimensional code information is printed by a computer-controlled printer.

## Amended claims

### Amended claims in accordance with Rule 137(2) EPC.

1. A two-dimensional code information recording card
**characterized in that** it includes
an invisible ink layer of the same color as printing (by computer-controlled printer) formed at a part or
the whole part of card paper,
a printing mask layer formed by printing (by computer-controlled printer) two-dimensional code information in an information area set at a part or the whole part of the upper surface of the invisible ink layer, wherein two-dimensional code information is recorded when the information area puts the invisible ink layer in mask state by printing of two-dimensional code and the two-dimensional code information of the printing mask layer is made indecipherable under visible rays but is made decipherable by floating the printing (by computer-controlled printer) of the printing mask layer on the upper surface of the invisible ink layer by irradiation of invisible rays or the like.

2. A two-dimensional code information code recording card as defined in Claim 1, **characterized in that** the invisible ink layer is formed with invisible ink which in matched to the printing (by computer-controlled printer) in color tone through luster and gloss matching.

3. A two-dimensional code information recording card
**characterized in that** it includes
a visible ink layer which becomes the surface of a card formed at a part or the whole part of card paper, an invisible ink layer formed with invisible ink at a part or the whole part of said visible ink layer which becomes the surface of a card, and
a printing mask layer composed by printing (by computer-controlled printer) two-dimensional code information in an information area set at a part or the whole part of the upper surface of said invisible ink layer,
wherein said visible ink layer, said invisible ink layer and said printing (by computer-controlled printer) are matched in color tone one another and two-dimensional code information is recorded by the information area putting the invisible ink layer in mask state by printing of two-dimensional code, whereby two-dimensional code information of the printing mask layer is made indecipherable under visible rays but is made decipherable by floating printing (by computer-controlled printer) of the printing mask layer on the upper surface of the invisible ink layer by irradiation of invisible rays or the like and the location of the information recording area in the card is made difficult to detect.

4. (amended) A method of recording two-dimensional code information **characterized in that**
a printing mask layer is formed in the shape of two-dimensional code on the upper surface of an invisible ink layer and two-dimensional code information is recorded by the invisible ink layer being put in mask state by printing of two-dimensional code, wherein two-dimensional code information is made decipherable by floating printing (by computer-controlled printer) of the printing mask layer on the upper surface of the invisible ink layer by irradiation of invisible rays and individual data record by two-dimensional code is made recordable by printing (by computer-controlled printer) of the printing mask layer.

5. (Amended) A method of recording two-dimensional code information **characterized in that**
an invisible ink layer is formed with invisible ink which is matched in color tone to printing (by computer-controlled printer) through luster and gloss matching on a visible ink layer and a printing mask layer is formed in the shape of two-dimensional code on the upper surface of the invisible ink layer by printing two-dimensional code information by a computer-controlled printer on the upper surface of the invisible ink-layer, whereby two-dimensional code information is recorded by putting the invisible ink layer in mask state by printing of two-dimensional code, two-dimensional code information is made decipherable by floating printing (by computer-controlled printer) of the printing mask layer on the upper surface of the invisible ink layer by irradiation of invisible rays and individual data record by two-dimensional code is made recordable by printing (by computer-controlled printer) of the printing mask layer.
